# FASCICULE DE BREVET EUROPEEN

(11) **EP 2 181 036 B1**
(45) Date de publication et mention de la délivrance du brevet: **07.11.2012**
(21) Numéro de dépôt: 08834976.6
(22) Date de dépôt: 24.07.2008
(51) Int. Cl.: B64C 27/18

(54) **DISPOSITIF AERIEN**
FLUGVORRICHTUNG
AERIAL DEVICE

(30) Priorité: 24.07.2007 MC 2536
(43) Date de publication de la demande: 05.05.2010
(73) Titulaire: Tourn, Jean-Claude, Monaco 98000 (MC)
(72) Inventeur: Tourn, Jean-Claude, Monaco 98000 (MC)
(74) Mandataire: de Zeeuw, Johan Diederick
(86) Numéro de dépôt international: PCT/FR2008/001104
(87) Numéro de publication internationale: WO 2009/044013

(56) Documents cités:
- CH-A- 260 009
- GB-A- 612 189
- JP-A- 5 213 280
- US-A- 2 396 130
- US-A- 2 814 349
- US-A- 2 894 589
- US-A- 3 032 120
- US-A- 3 053 324
- US-A- 3 116 040
- US-A- 5 149 014
- US-A- 5 641 269

## Description

L'invention concerne un dispositif aérien comportant une structure et un élément tournant, pourvu d'au moins une pale, adapté pour effectuer une rotation relative à la structure autour d'un axe de rotation.

Le dispositif aérien est adapté pour générer, avec l'élément tournant, une force aérodynamique. Le dispositif selon l'invention peut, en soi ou connecté à une charge, opérer comme un aérodyne.

Dans le texte suivant, avec le mot « aérodyne », référence est faite à un appareil capable d'évoluer au sein de l'atmosphère terrestre. L'aérodyne, en soi, est plus lourd que l'air, mais sa sustentation est assurée par une force aérodynamique, la portance, produite à l'aide d'une ou plusieurs pales.

Le dispositif selon l'invention peut, en soi ou connecté à une charge, voler d'une façon comparable à celle d'un hélicoptère. Les hélicoptères, comparés aux aéronefs classiques à ailes fixes, possèdent des avantages considérables. L'hélicoptère peut effectuer un vol stationnaire. Cela signifie que l'hélicoptère peut se maintenir en position fixe en vol. Cela lui permet d'atteindre des endroits qui seraient inaccessibles à son homologue à voilure fixe qui lui doit presque toujours utiliser une piste.

Cependant, en comparaison avec des avions, un hélicoptère est de conception plus complexe. Il est plus onéreux à l'achat et à l'usage. De plus, un hélicoptère classique est pourvu d'un rotor principal, dont l'axe est essentiellement vertical. Ce rotor assure la sustentation et également le contrôle d'altitude et de tangage et roulis de l'hélicoptère.

Dans le cas où le rotor principal est utilisé sur un hélicoptère, sa rotation s'effectue grâce à un moteur. Cette action produit un couple sur la structure de l'hélicoptère. Pour compenser ce couple, l'hélicoptère a besoin d'un second rotor, que l'on nomme en général « rotor de queue » ou « rotor anti-couple ». L'axe de ce second rotor est sensiblement horizontal. Ce deuxième rotor empêche l'hélicoptère de tourner sur lui-même lorsque le rotor principal tourne et permet d'assurer le contrôle en lacets.

Dans l'art antérieur, plusieurs solutions sont divulguées pour éviter la construction relativement complexe avec un rotor principal et un rotor de queue. Une première solution est proposée par le constructeur russe Kamov. Les hélicoptères, portant le nom de ce constructeur, utilisent deux rotors de sustentation coaxiaux tournant en contre sens.

Une deuxième solution proposée est celle qui offre d'utiliser deux rotors de sustentation en tandem. Le premier rotor est positionné derrière l'autre. Les deux rotors tournent en contre sens. Ce système a été développé par l'américain Frank Piaseki.

Un autre hélicoptère, pouvant fonctionner sans rotor de queue, est commercialisé sous le nom « K-Max ». Il est pourvu de deux rotors principaux. Les deux rotors sont montés sur l'habitacle de l'hélicoptère, formant un angle permettant de neutraliser le moment produit par un premier rotor en utilisant le second rotor.

Selon l'art antérieur, les hélicoptères ont apporté la preuve qu'il est possible de voler avec un hélicoptère sans posséder de rotor de queue, monté sur l'arrière de l'hélicoptère pour neutraliser le moment produit par le rotor principal dudit hélicoptère.

Le document US 5,149,014 divulgue un hélicoptère pourvu d'un ventilateur permettant de générer un courant d'air éjecté par des orifices prévus au sein des pales creuses et permettant de faire pivoter lesdites pales par rapport à l'hélicoptère grâce à l'air sortant de ces orifices.

Dans la solution selon ce document, les pales possèdent une double fonction. Les pales sont utilisées, d'une part, pour guider de l'air comprimé sortant du ventilateur à distance par rapport à l'axe de rotation des pales. D'autre part, les pales servent à créer une sustentation.

Le document US 2,894,589 concerne la réalisation de la combinaison d'une pale et d'un guide pour les gaz dans laquelle ladite combinaison permet de faire tourner des pales par rapport à une structure fixe en utilisant des gaz sortant des orifices situés à l'extrémité de cette combinaison pale / guide. Le document ne divulgue pas la possibilité de séparer les fonctionnalités pour avoir, d'un côté une pale et de l'autre côte un élément en forme de tube permettant de guider de l'air comprimé vers la sortie d'un guide pour les gaz.

Le document US 2,814,349 décrit un dispositif comportant quatre pales ayant chacune une double fonction. Les pales forment tout d'abord des moyens permettant de créer une force aérodynamique et ensuite celles-ci sont creuses et permettent de guider un gaz vers un orifice situé à l'extrémité d'une pale et laisser sortir ledit gaz utilisé pour faire pivoter le dispositif par rapport à un hélicoptère. Selon le document US 2,814,349 les quatre pales sont chacune pourvue d'une turbine.

L'ensemble des turbines a besoin de carburant qui doit être conduit vers l'élément pivotant.

Le document GB 612189 divulgue un hélicoptère pourvu d'un élément tournant muni de pales et de bras pourvus, en leurs extrémités, de générateur permettant de créer un courant d'air pour faire pivoter ledit élément tournant par rapport à l'hélicoptère.

Selon la construction décrite dans ce document, l'élément tournant possède deux bras munis de générateurs indépendants. Les générateurs étant fixés à l'extrémité des bras, il est nécessaire de transporter du carburant vers l'extrémité de ce bras pivotant.

Le document suisse CH260009 montre un hélicoptère pourvu d'un générateur dans lequel la sortie est connectée à un conduit, lui-même connecté à l'entrée des deux pales, chacune d'entre elle étant pourvue, en son extrémité, d'un orifice permettant d'éjecter les gaz et de faire ainsi pivoter les pales par rapport à l'hélicoptère.

Le document CH260009 ne divulgue pas la possibilité d'avoir une séparation de fonctions entre des pales et des bras comportant des guides pour guider des gaz vers une sortie.

Le document US 3,032,120 concerne un dispositif pourvu d'une pluralité de pales, chacune d'entre elles pourvue, en son extrémité, d'un orifice permettant l'échappement du gaz. Grâce à l'utilisation de cette sortie de gaz, l'ensemble des pales peut pivoter par rapport à un hélicoptère.

Le document US 3,116,040 décrit la possibilité d'avoir un élément tournant par rapport à une structure dans laquelle ledit élément tournant est pourvu de quatre bras, chacun d'entre eux étant pourvu d'un générateur de gaz en son extrémité.

De plus, les générateurs situés aux extrémités des pales ont besoin d'être connectés à une source de carburant.

Le document US 2,396,130 concerne un dispositif aérien comportant une structure et un élément tournant pourvu d'au moins une pale et un conduit permettant de guider des gaz vers un orifice à distance de l'axe de rotation de l'élément tournant. Le dispositif selon le document susvisé est pourvu d'une hélice connectée à un moteur permettant de faire tourner ladite hélice afin de générer la compression d'une quantité d'air qui, après la compression, est guidé, à l'aide d'un conduit relativement grand et non linéaire vers l'élément tournant.

Le document US 5,641,269 comprend une structure dans laquelle du gas peut être transporté grâce à des tuyaux vers des pales ayant une double fonction. Les pales selon ce document sont utilisées non seulement pour leur fonction classique mais également pour former un guide permettant de guider des gaz comprimés d'un dispositif responsable de la répartition des gaz vers des sorties à l'extrémité des pales.

Pourtant, un désavantage important des solutions selon l'art antérieur réside dans le fait que leurs constructions restent relativement complexes, donc onéreuses.

En vertu des observations ci-dessus, le but de la présente invention est de fournir un dispositif aérien qui peut voler, soit par lui-même, soit connecté à une charge, de la même façon qu'un hélicoptère traditionnel mais qui est, en comparaison, de construction relativement légère et simple.

L'objet de l'invention est un dispositif aérien, selon la revendication 1.

Dans le texte, référence est faite à la « sortie du générateur ». Avec ce mot, référence est faite à l'élément qui est responsable de la répartition des gaz produits par le générateur.

Selon ce mode de réalisation, une séparation est réalisée entre les pales utilisées pour produire une surface aérodynamique et créer ainsi la portance pour le dispositif selon l'invention et les bras moteurs qui sont eux utilisés pour éjecter le gaz à distance de l'axe de rotation de l'élément tournant.

Un premier avantage de cette solution réside dans le fait que la chaleur du gaz éjecté par le générateur est conservée à distance des pales. Cela signifie que le constructeur garde l'entière liberté pour la construction des pales, sans avoir besoin d'utiliser un matériau capable de résister à une haute température. De plus, les bras moteur étant présents, ils peuvent ainsi être connectés, de manière fixe, à l'élément tournant. Afin de contrôler la portance, l'angle d'incidence des pales est varié. Cela signifie que les pales sont montées sur l'élément tournant de façon à permettre leur rotation par rapport à la structure. Les bras moteurs ne sont pas nécessaires à la variation de l'angle d'incidence.

Il est noté que dans le texte, référence est faite aux « bras moteurs ». Avec cette phrase, référence est faite aux tuyaux adaptés pour conduire du gaz, généré par un générateur, en direction d'un orifice permettant son éjection. Un tel bras moteur peut être construit à l'aide de tout matériau adapté pour résister à la chaleur tel que l'acier inox.

Selon un mode de réalisation préféré, le générateur est positionné dans le dispositif avec son axe central concentrique à l'axe de rotation de l'élément tournant.

Le résultat de cette réalisation réside dans le fait que l'élément tournant est actionné grâce à un jet de gaz expulsé par l'orifice à la fin du conduit. Ce jet de gaz est le produit d'un courant d'air généré et guidé dans l'élément tournant lui-même. Cela signifie que la production de ce jet de gaz n'entraîne pas de moment résultant, devant être neutralisé par un rotor additionnel. De plus, la sortie du générateur de gaz tourne par rapport à la structure. Cela présente l'avantage que le dispositif selon l'invention n'a pas besoin de connexions compliquées pour guider le courant d'air d'un générateur, faisant partie d'une élément stationnaire du dispositif, en direction d'un élément tournant.

De ce fait, la construction du dispositif selon l'invention peut être relativement facile et donc relativement économique.

Grâce au fait que le système est relativement simple, donc relativement économique, le dispositif selon l'invention peut être utilisé pour transporter, de façon ponctuelle et de façon automatique, des charges quelles qu'elles soient, par exemple humanitaires, de premiers secours, vivres, eau pour lutter contre les incendies, munitions, systèmes de recherche, etc.

Le dispositif selon l'invention est ainsi particulièrement adapté pour des travaux agricoles, par exemple pour la dispersion des engrais sur les terrains.

De plus, le dispositif selon l'invention peut décoller et atterrir de façon verticale, ce qui signifie que le dispositif peut être utilisé au dessus de terrains impraticables ou hostiles. Le grand avantage de la construction du dispositif selon l'invention réside dans le fait que ce dispositif ne possède aucun des éléments lourds, complexes et onéreux qui composent généralement les hélicoptères. Cela signifie que des éléments tels que l'embrayage pour le rotor principal et le rotor de queue, le rotor anti-couple de fuselage, etc. ne sont plus nécessaires.

Selon l'invention, le dispositif peut utiliser une boîte de réduction en granage.

Il est à noter que dans l'art antérieur, il existe un hélicoptère commercialisé sous le nom « DJINN ». Celui-ci est pourvu d'une hélice possédant au moins deux pales pourvues, à leurs extrémités, d'orifices permettant de laisser passer un jet d'air. Toutefois, la production du courant d'air sur un tel hélicoptère « DJINN » est réalisée dans la partie stationnaire de l'hélicoptère. Cela signifie que celui-ci a besoin de connexions compliquées permettant de laisser passer le courant d'air d'un générateur vers les extrémités des hélices de l'hélicoptère.

Dans un mode de réalisation préféré, le bras moteur est profilé pour participer à la sustentation générée par l'élément tournant. Les bras moteurs ayant un profil aérodynamique peuvent assister à la production de la portance.

Dans un mode de réalisation préféré, l'élément tournant est connecté avec la structure grâce à un cardan. L'effet résultant de cette mesure réside dans le fait que les forces de Coriolis sont évitées.

De façon alternative, il est possible que les pales soient connectées avec l'élément tournant grâce à un joint homocinétique.

Selon un mode de réalisation préféré, la structure est adaptée pour fixer le dispositif aérien sur une charge. Une telle charge peut se présenter sous la forme d'une cabine qui, combinée au dispositif selon l'invention, pourrait ressembler à un hélicoptère traditionnel.

De façon alternative, le dispositif selon l'invention peut être fixé sur toutes sortes de charges. A titre d'exemples :
- containers,
- véhicules terrestres ou maritimes,
- matériaux de construction,
- une quantité d'eau, dans le cas où le dispositif selon l'invention est amené à être utilisé dans la lutte contre les incendies.

Il convient de bien comprendre que le dispositif selon l'invention peut être utilisé pour déplacer une multitude d'autres charges.

Selon un mode de réalisation préféré, le dispositif est pourvu d'une télécommande pour contrôler à distance la sustentation générée par l'élément tournant. Il faut noter qu'il est possible que le dispositif selon l'invention fonctionne de façon autonome. Dans ce cas là, le dispositif est, par exemple, commandé grâce à une gestion assistée par ordinateur. Cette mesure signifie que le dispositif selon l'invention peut être utilisé sans qu'une personne soit obligée de le transporter.

Dans un deuxième temps, l'invention concerne un aérodyne pourvu d'un dispositif aérien selon l'invention.

Les détails et les avantages du dispositif selon l'invention apparaîtront plus clairement à la lecture du texte fait en référence des dessins suivants, dans lesquels :
- la figure 1 montre un hélicoptère classique, selon l'art antérieur ;
- la figure 2 montre un hélicoptère « K-Max »,
- la figure 3 montre un dispositif aérien selon l'invention,
- la figure 4 montre en détail le positionnement du générateur de gaz dans le dispositif aérien selon l'invention, selon un premier mode de réalisation,
- la figure 5 montre un deuxième mode de réalisation du dispositif aérien selon l'invention,
- la figure 6 montre la connexion entre le générateur de gaz et le bras moteur du dispositif selon la figure 5,
- la figure 7 montre le dispositif aérien selon la figure 3, fixé sur une charge,
- la figure 8 montre le dispositif aérien selon la figure 3, fixé sur une automobile,
- la figure 9 montre une structure rigide pourvue de plusieurs dispositifs aériens selon l'invention,
- la figure 10 montre un ensemble de structures pourvues de plusieurs dispositifs aériens selon l'invention, connectés à un ballon à hélium,
- la figure 11 montre un mode de réalisation du dispositif aérien qui n'est pas couvert par la présente invention.
- la figure 12 montre un hélicoptère, pourvu d'un dispositif aérien, selon un mode de réalisation qui n'est pas couvert par la présente invention, et
- la figure 13, de façon schématique, le quadrillage d'un terrain sur lequel est posé un dispositif aérien selon l'invention, qui pourra être utilisé dans les actions de lutte contre les feux de forêts.

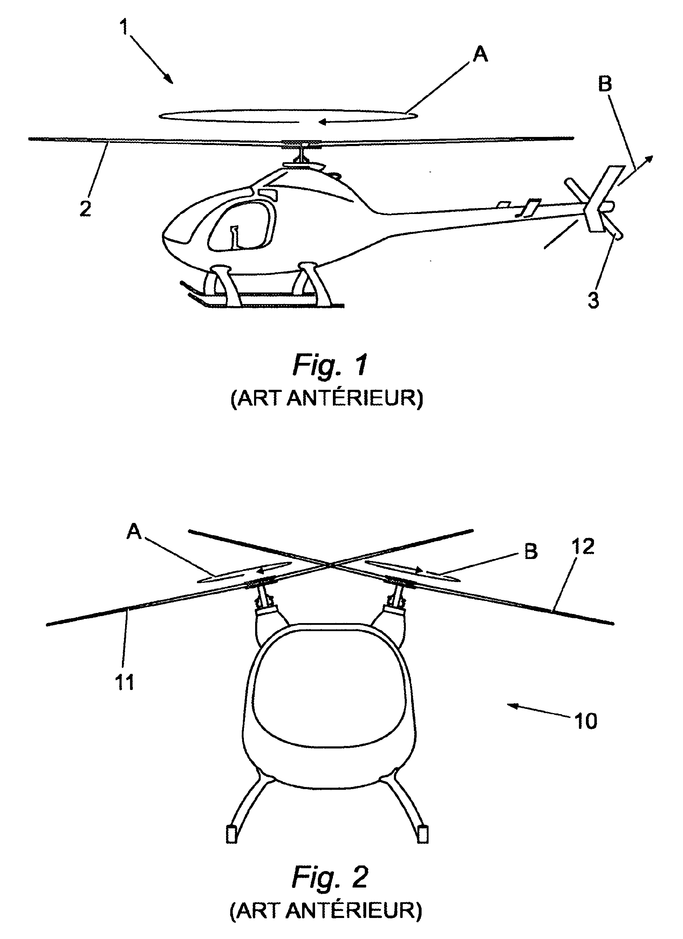

La figure 1 montre un hélicoptère classique selon l'art antérieur. L'hélicoptère 1 pourvu d'un rotor principal 2 et pourvu d'un rotor de queue additionnel 3 à l'arrière de l'hélicoptère. Le rotor principal 2 produit un moment résultant (A) sur l'hélicoptère. L'hélicoptère 1 a besoin du second rotor 3 pour produire un moment dans la direction (B) afin de neutraliser le moment résultant (A) du rotor principal.

Le rotor principal 2 et le rotor de queue 3 ont chacun besoin d'éléments lourds et complexes, tels qu'un embrayage, une boîte de transmission, fuselage, etc. Cela signifie que la construction d'un hélicoptère selon l'art antérieur, avec un rotor principal 2 et un rotor de queue 3, représente une construction relativement onéreuse.

La figure 2 montre un hélicoptère selon le principe du « K-Max ». L'hélicoptère 10 est pourvu d'un premier rotor 11 et d'un second rotor 12. Les rotors 11 et 12 sont montés de telle manière qu'ils forment un angle entre eux.

Le rotor 11 produit un moment résultant (A) neutralisé par le moment (B) généré par le rotor 12.

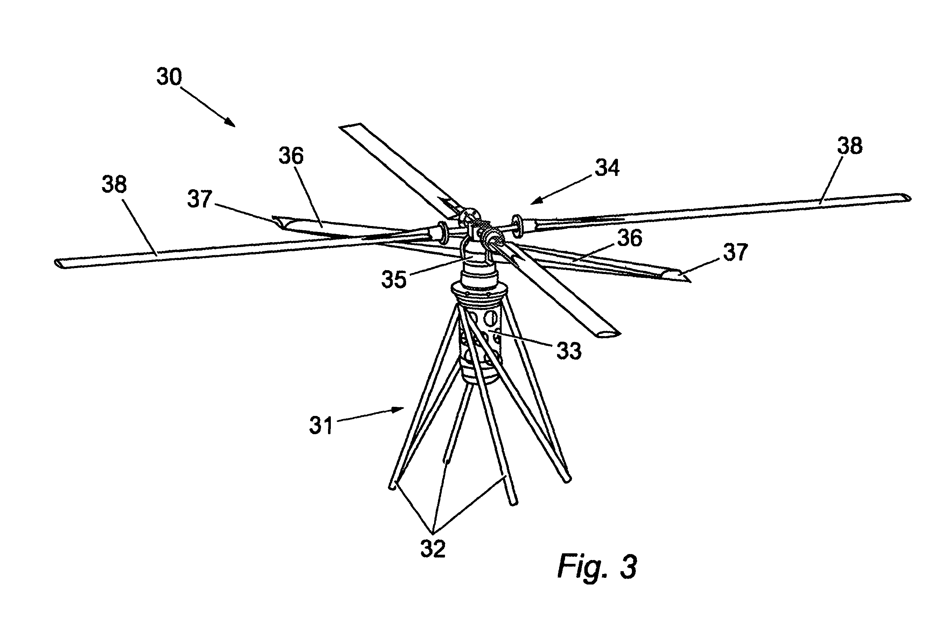

La figure 3 montre un premier mode de réalisation d'un module aérien 30 selon l'invention. Le dispositif aérien 30 comprend une structure 31 pour fixer le dispositif 30 sur un support tel qu'une charge. Cette structure 31 est pourvue des éléments de fixation 32 permettant de connecter le dispositif 30 avec une charge.

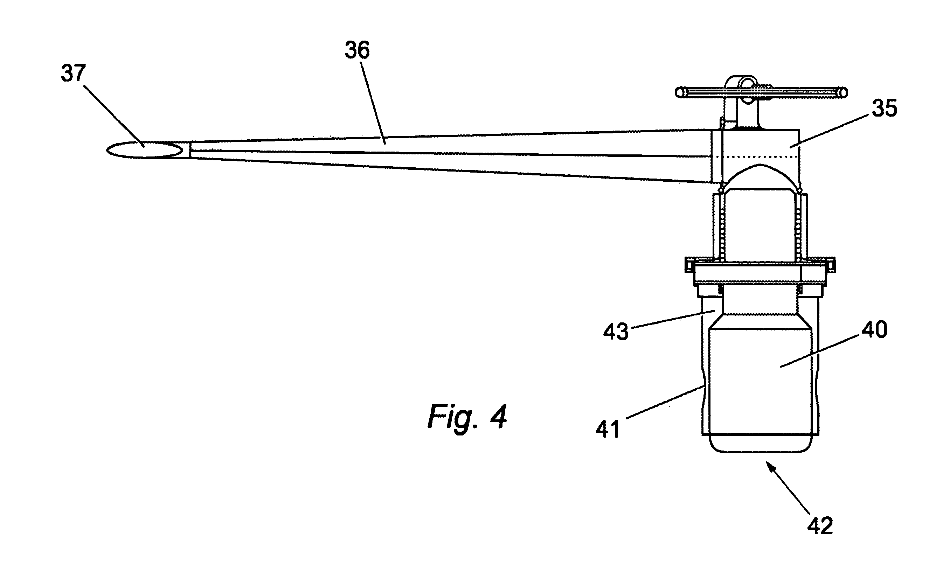

De plus, la structure 31 est elle-même pourvue d'un élément 33 permettant de recevoir l'élément de propulsion du dispositif 30, tel qu'un générateur de gaz (voir figure 4). La structure 31 est adaptée pour former un élément statique du dispositif 30 selon l'invention.

Dans un deuxième temps, le dispositif aérien 30, selon la figure 3, comprend un élément rotatif 34. L'élément 34 est adapté pour effectuer une rotation relative à la structure 31 autour d'un axe de rotation. L'élément rotatif 34 comprend un dispositif de répartition des gaz 35. Ce dispositif de répartition des gaz 35 est directement lié au générateur de gaz qui se trouve à l'intérieur de l'élément 33.

Deux bras moteur 36 sont directement fixés sur le dispositif de répartition des gaz 35, chacun d'entre eux étant pourvu, en leur extrémité, d'un orifice 37 adapté pour une éjection de gaz dans une direction essentiellement perpendiculaire à l'axe longitudinal des bras moteur 36.

Les bras moteur 36 sont utilisés pour créer une distance entre l'axe de rotation de l'élément tournant 34 et les orifices 37 permettant d'éjecter des gaz. L'élément tournant 34 comprend également des pales 38. Chacune des pales 38 est montée sur l'élément tournant 34 pour permettre une variation de l'angle d'incidence des pales 38. Les pales 38 ont un profil symétrique ou asymétrique et agissent en rotation suivant le même principe que les ailes d'un avion. L'élément tournant 34 tournant toujours à vitesse angulaire constante, c'est la variation de l'angle d'incidence des pales 38, autrement dit l'angle formé entre la corde des pales 38 et le vent relatif, qui provoque une modification de la position de l'aéronef. Pour monter avec le dispositif 30, à vitesse constante, on augmente l'incidence des pales. Au contraire, pour descendre, on diminue l'angle d'incidence des pales 38.

La construction du dispositif 30 selon la figure 3 montre qu'avec le dispositif 30 il est possible de créer une portance avec les pales 38, sans qu'un couple de réaction ne soit entraîné sur la structure 31. C'est la raison pour laquelle le dispositif 30 selon la figure 3 peut être fixé directement sur un support tel qu'une charge et l'ensemble peut voler sans avoir recours à des moyens pour compenser ce couple.

La structure 31 montrée en figure 3 peut, pour cette raison, être utilisée comme moyen de propulsion, relativement simple et donc relativement économique.

Afin de mieux contrôler les forces générées par le dispositif 30 et pour commander le dispositif 30 pendant un vol, l'ensemble de réacteurs de gaz, le dispositif de répartition des gaz 35, les bras moteurs 36 et les pales 38 peuvent être montés sur un cardan. Cela signifie qu'il y a une possibilité de régler la position de l'élément tournant 34 par rapport à la structure 31 en évitant les forces de Coriolis. De façon alternative, l'ensemble des pales 38 peut être monté sur joint homocinétique.

Dans la figure 4, quelques éléments du dispositif 30 selon la figure 3 sont montrés plus en détail. Le numéro 40 représente de façon schématique un générateur de gaz. Celui-ci produit un courant d'air qui sera utilisé afin d'entraîner, en rotation, l'élément 34 relatif à la structure 31. Le générateur de gaz est entouré par une connexion 41 pour fixer le générateur de gaz dans l'élément 33 de la structure 31. Le gaz produit grâce au générateur de gaz 40 est forcé en direction du dispositif de répartition des gaz 35. Comme décrit en référence à la figure 3, cette disposition de répartition des gaz 35 fait partie de l'élément tournant 34.

La construction avec le dispositif de répartition des gaz 35 qui fait partie de l'élément tournant 34 permet le passage d'air vers les bras moteurs 36 en direction des orifices 37 sans avoir besoin d'aucune connexion ni compliquée ni onéreuse.

Le dispositif 30 selon les figures 3 et 4 montre que le réacteur est essentiellement positionné de façon verticale, concentrique au mat des pales 38. Les gaz d'échappement sont directement éjectés dans les bras moteurs 36.

Il convient de noter que, dans un mode de réalisation préféré, les bras moteurs 36 sont également profilés afin de créer une surface aérodynamique additionnelle pour participer à la production de la portance grâce aux bras moteurs 36.

Pour une construction, tel que montré en figure 4, l'entrée d'air 41 se trouve en bas du réacteur de gaz 40. Dans un mode de réalisation préféré, une autre prise d'air se trouve à la base ou encore le long des parois du carter rotatif ou mât rotatif. Le dispositif est pourvu de godets ou ailettes permettant d'orienter l'air le long du mât moteur. L'air étant éjecté autour de gaz chauds, cela permet de les refroidir et diminuer ainsi l'impact sonore. L'air ainsi orienté entre le réacteur et le mât tournant peut refroidir le gaz autour d'une température d'environ 300 à 400 degrés. Cela signifie que toutes les pièces dans lesquelles le gaz est transporté sont moins sollicitées par la chaleur du gaz.

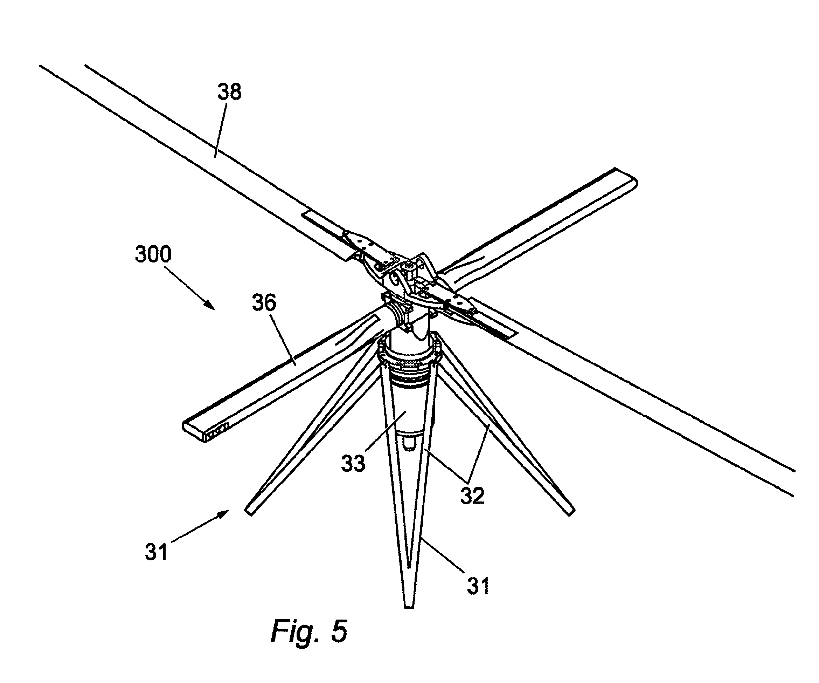

Dans la figure 5, un deuxième mode de réalisation d'un modèle aérien 300 est montré. Le dispositif aérien 300 comprend une structure 31 permettant de fixer le dispositif 300 sur un support tel qu'une charge. Cette structure 31 est pourvue des éléments de fixation 32, comme pour le premier mode de réalisation montré dans la figure 3.

Le module aérien 300 comprend un générateur de gaz 33 réalisé de façon à ce que les axes mâts et le générateur de gaz soient confondus. Le module aérien 300 selon la figure 5 comprend une première et une deuxième pale 38. De plus, le dispositif aérien comprend un premier et un deuxième bras moteur 36.

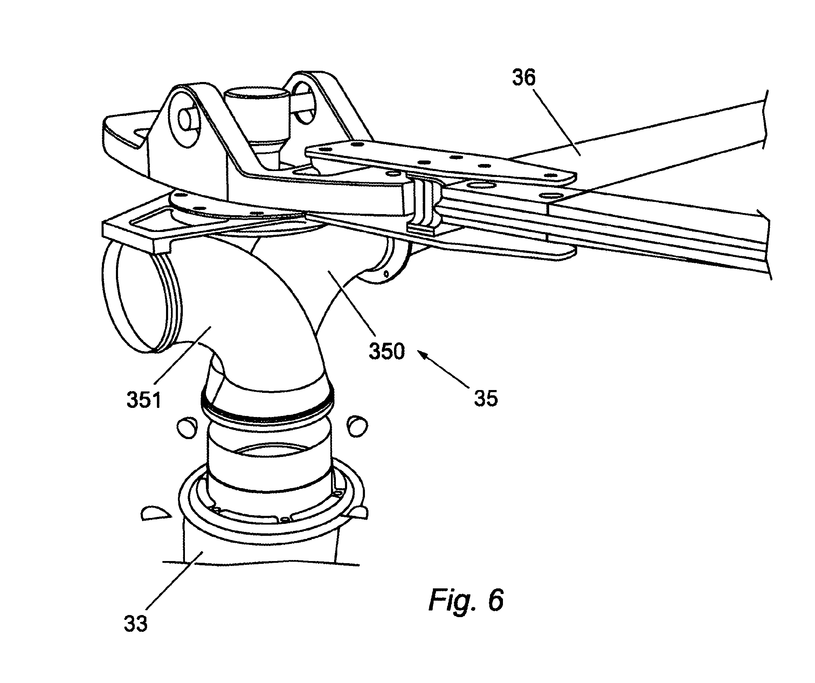

La connexion entre le générateur de gaz 33 et les bras moteur 36 est montrée plus en détail en figure 6. La figure 6 montre une disposition de répartition de gaz 35 avec un premier élément 350 et un deuxième élément 351 qui, chacun, forme une connexion entre le générateur de gaz 33 et un bras moteur 36. Pour des raisons de clarté, un seul bras 36 a été montré en figure 6.

La figure 6 montre que la construction du dispositif 300 fournit une connexion simple et robuste permettant de transférer les gaz de la sortie du générateur de gaz 33 vers les bras moteur 36.

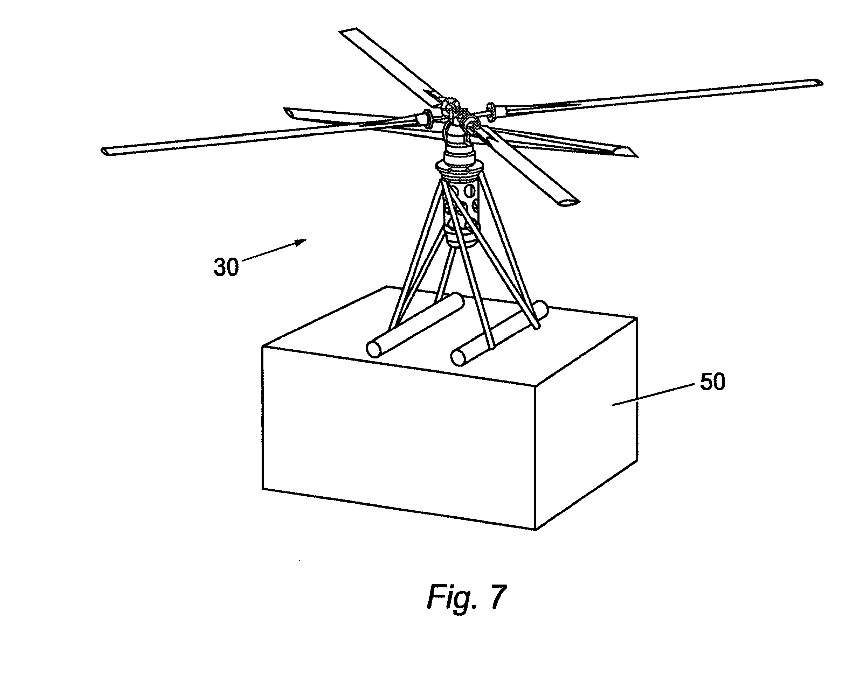

Dans la figure 7, le dispositif aérien selon les figures 3 et 4 est montré, fixé sur une charge 50. Il convient de comprendre que le dispositif aérien 30, tel que montré en figures 7, 8, 9 et 10 pouvait être remplacé par le dispositif 300 selon les figures 5 et 6. L'ensemble formé par le dispositif 30 et la charge 50 est capable de voler. Les possibilités de fixer une charge 50 au dispositif 30 sont infinies. Les charges peuvent être de tous types, comme des containers, des véhicules terrestres ou maritimes, etc. Il est possible de déplacer des charges 50 sur des distances de plusieurs kilomètres, avec des variations importantes d'altitude.

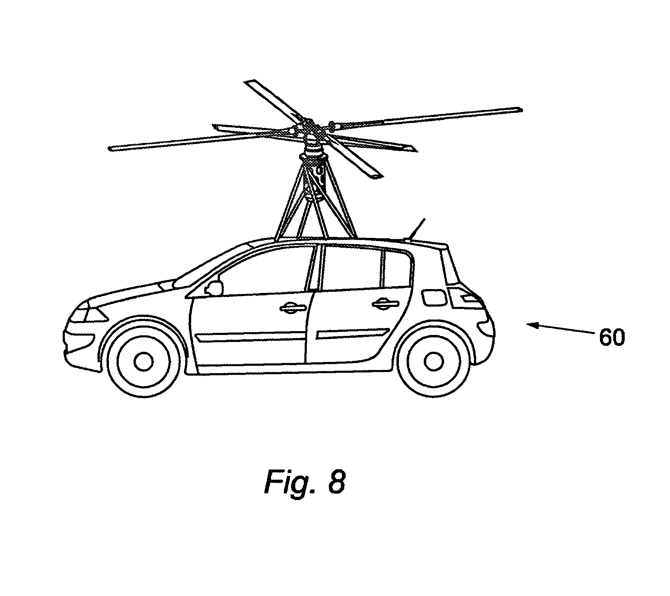

En théorie, il est possible de monter un dispositif 30 sur un véhicule, comme montré dans les figures 3 et 4. Cette éventuelle possibilité d'utilisation est montrée en figure 8.

La figure 8 montre une voiture 60 pourvue d'un dispositif 30 selon la figure 3. Les connexions entre le dispositif 30 et la voiture 60 peuvent être relativement simples et peu onéreuses.

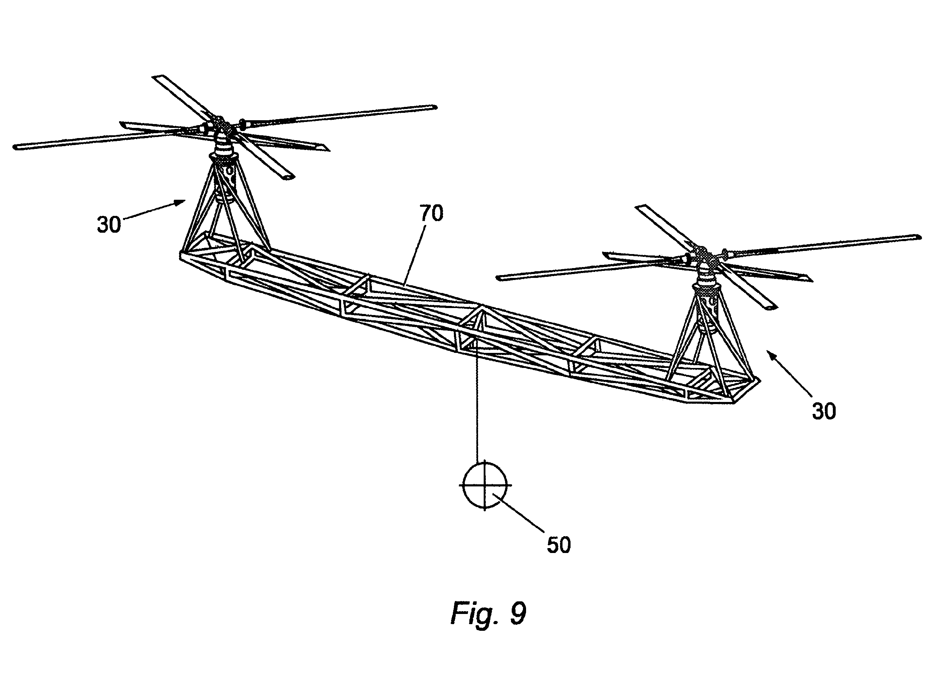

Il convient de comprendre que l'un des grands avantages du dispositif 30 selon l'invention réside dans sa grande modularité. Dans la figure 9, une structure rigide 70 est montrée, couplée avec un premier et un deuxième module 30 selon la figure 3.

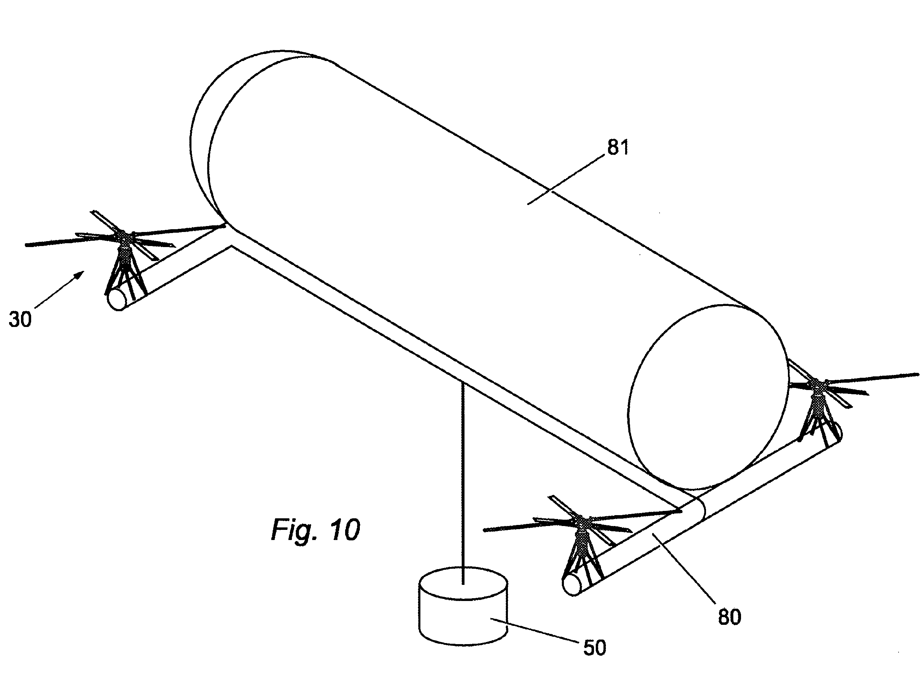

La construction, montrée en figure 9, présente les possibilités d'utiliser une structure rigide et plusieurs modules 30 afin de multiplier d'autant la force de levage obtenue grâce à l'ensemble. Au-dessous d'une telle structure 70, une charge 50 peut être levée. Une autre possibilité d'utilisation d'une structure rigide 70 et plusieurs dispositifs aériens selon l'invention est montrée en figure 10. Dans la figure 10, quatre dispositifs aériens 30 selon l'invention, installés sur une structure 80, sont montrés. La structure selon la figure 10 peut être utilisée pour des charges 50 extrêmes. Pour annuler la masse de la charge 50, un ballon à hélium 81 est installé sur la structure 80. Le fait que le ballon à hélium 81 soit utilisé signifie que la consommation de carburant, nécessaire à faire voler l'ensemble, peut être réduite. Par ailleurs, le poids maximum qu'il est possible de soulever est augmenté.

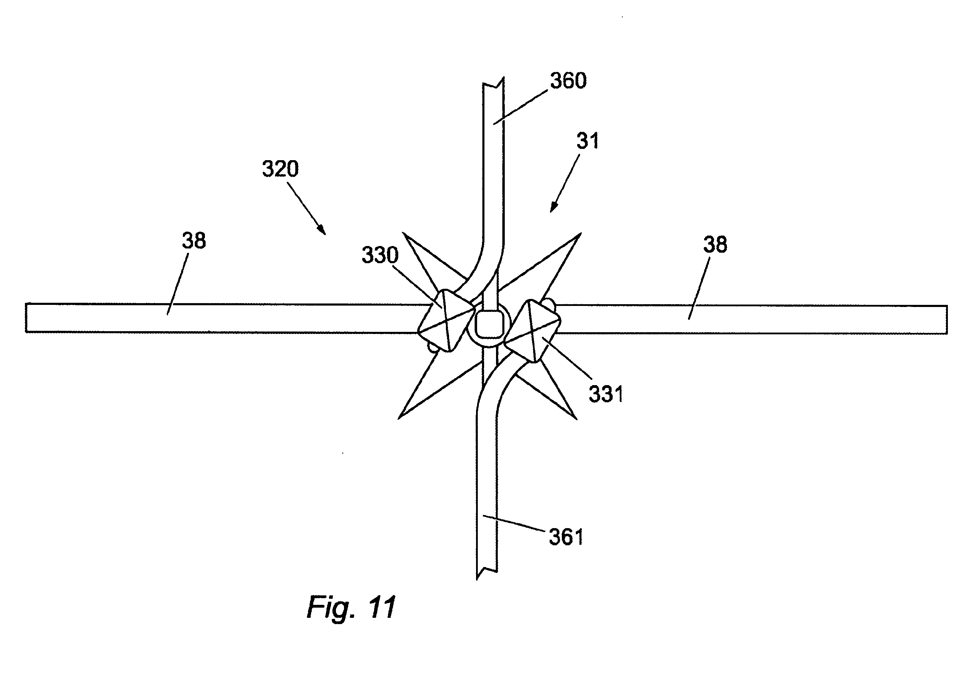

Un mode de réalisation du dispositif aérien 320 qui n'est pas couvert par l'invention est montré dans la figure 11. Selon la figure 11, le dispositif aérien 320 comprend une structure 31 permettant de fixer le dispositif aérien 320 sur un support tel qu'une charge. La partie tournante, qui tourne grâce à cette structure 31, comprend une première et une deuxième pale 38. De plus, la partie tournante comprend un premier et un deuxième bras moteur 360, 361.

Selon la figure 11, le bras moteur 360 est connecté à un premier générateur de gaz 330, le deuxième bras moteur 361 est connecté à un deuxième générateur de gaz 331. Les deux générateurs de gaz 330 et 331 sont intégrés à la partie tournante du dispositif aérien 320. Cela signifie que la partie de gaz des générateurs de gaz 330 et 331 peut directement être connectés à l'entrée des bras moteur 360 et 361. Les connexions entre le générateur de gaz 330 et le bras moteur 360 et le générateur 331 et le bras moteur 361 sont donc directes, simples et robustes.

Dans le cas où les deux générateurs de gaz 330 et 331 sont intégrés à la partie tournante du dispositif aérien 320, le réservoir de combustion pour les générateurs de gaz peut également être intégré à la partie tournante du dispositif aérien 320. Cela signifie que le réservoir de combustion tourne avec les deux générateurs de gaz et les bras moteurs auxquels lesdits générateurs de gaz sont connectés.

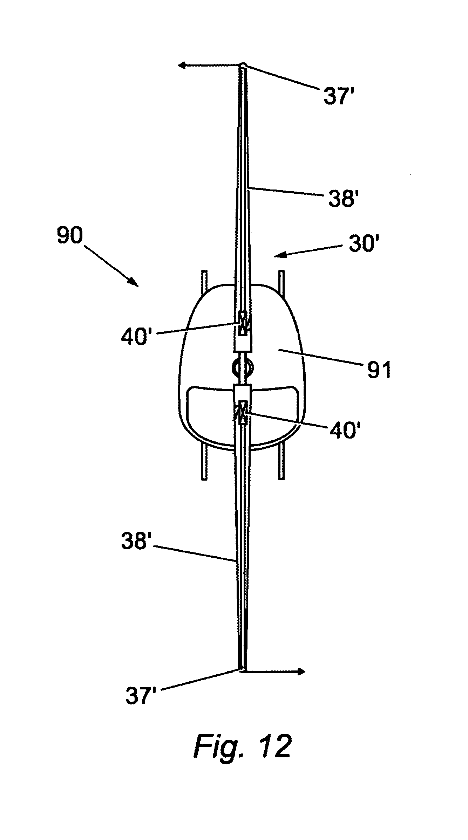

Dans un mode ultérieur de réalisation du dispositif aérien qui n'est pas couvert par l'invention, les générateurs de gaz sont positionnés directement à l'intérieur ou sont solidaires avec des pales. Un tel dispositif, utilisé pour réaliser un hélicoptère, est montré en figure 12. L'hélicoptère 90 comprend un habitacle 91 pourvu du dispositif aérien 30' selon l'invention. Le dispositif 30' comprend une première et une deuxième pale 38'. A l'intérieur des pales 38' se trouve un générateur de gaz 40'. Les pales 38' sont, en leur extrémité, pourvues d'orifices 37'.

Dans la construction montrée en figure 12, les générateurs de gaz 40' font partie intégrante des pales 38'. Cela signifie qu'ils tournent, avec les pales, autour d'un axe de rotation. Un courant d'air est créé à l'aide des pales 38'. Avec cette construction, le dispositif aérien 30' selon l'invention n'a pas besoin de connexions complexes pour conduire le gaz produit par les générateurs de gaz 40' vers leurs destinations respectives 37'.

Dans la figure 12, un hélicoptère 80 comportant deux pales 38' est montré. Le système selon la figure 12 est modulaire ; cela veut dire que si une portance plus importante est nécessaire, la quantité des pales 38' peut être augmentée. Le système peut être équipé de quatre à six pales.

Les dispositifs 30 et 30' selon l'invention, en combinaison avec une charge, peuvent être utilisés à plusieurs fins. L'une d'entre elles consisterait à utiliser ce dispositif sans avoir besoin de personnel. Cela signifie que les dispositifs 30 et 30' selon l'invention peuvent être conduits à l'aide d'une télécommande. De façon alternative, les dispositifs 30 et 30' selon l'invention peuvent être connecté à un système de gestion afin d'être préprogrammé et réaliser des missions de façon autonome. Dans ce cas là, à l'aide de capteurs, la situation nécessitant l'intervention des dispositifs 30 et 30' est identifiée. Les capteurs envoient des signaux au système de gestion qui prend, de façon automatique, le contrôle des dispositifs afin d'assurer l'intervention nécessaire des dispositifs 30 et 30'.

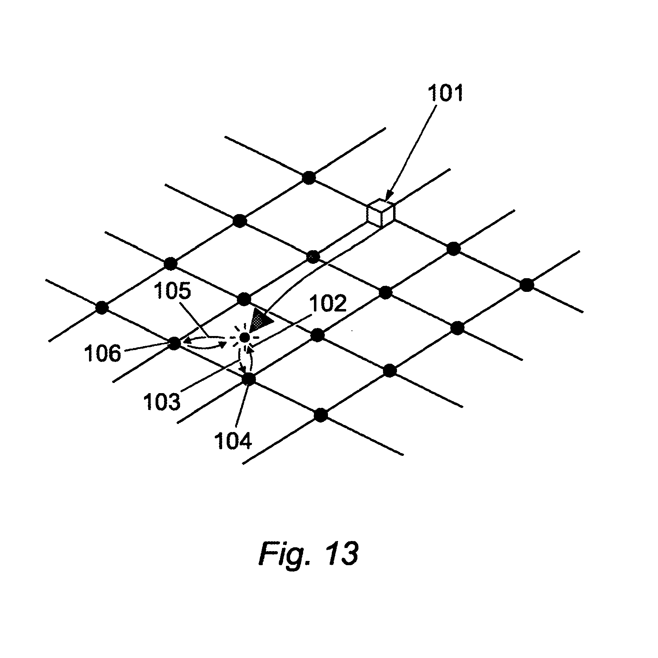

Une des différentes utilisations des dispositifs 30 et 30' est montrée en figure 13. Sur la figure 10, une partie d'un terrain comportant une base d'atterrissage 101 est représentée de façon schématique. Dans cette base, les dispositifs 30 et 30' selon l'invention sont préparés et prêts à être utilisés.

Si un incendie est signalé à proximité de cette base, les dispositifs 30 et 30' selon l'invention, seront dirigés, à l'aide d'une télécommande ou de façon automatisée, sur les lieux de l'incendie 102. Les dispositifs 30 et 30' selon l'invention seront, par exemple, pourvus d'une première quantité d'eau permettant d'attaquer le début de l'incendie. La télécommande des dispositifs 30 et 30' selon l'invention peut éventuellement être réglée en « mode automatique », sans aucune autre intervention humaine. Cela signifie qu'il est possible d'intervenir très rapidement, dès la première alerte, l'hélicoptère étant opérationnel immédiatement. Après le premier largage d'eau, les dispositifs 30 et 30' selon l'invention peuvent être dirigé vers un dépôt, présent à proximité de la base, suivre le chemin 103, arriver à un nouveau point d'eau 104 et refaire le plein d'eau pour un nouveau largage.

Dans le cas où le point d'eau 104 n'est plus approvisionné en eau, les dispositifs 30 et 30' selon l'invention peuvent alors suivre le chemin 105 afin d'arriver à un nouveau point d'eau 106 et continuer ainsi leur mission.

Les dispositifs 30 et 30' selon l'invention peuvent accomplir toutes ces rotations par un guidage télécommandé ou automatisé et, par exemple, peuvent être immédiatement opérationnels dans les premières trente minutes suivant le déclenchement d'un incendie. Après ce laps de temps, les canadairs et les pompiers peuvent prendre le relais.

Il est important de noter que l'utilisation des dispositifs 30 et 30' selon l'invention selon la figure 13, pour une lutte contre un incendie, ne représente qu'une des différentes possibilités d'utilisation de ce dispositif.

## Revendications

1. Dispositif aérien (30, 300), comportant une structure (31) et un élément tournant (34) pourvu d'au moins une pale (38), adapté pour effectuer une rotation relative à la structure (31) autour d'un axe de rotation, le dispositif (30, 300) étant pourvu de moyens permettant d'entraîner la rotation de l'élément tournant (34) relatif à la structure (31), ces moyens comprenant un générateur de gaz (33, 40) reçu dans la structure (31) et un conduit permettant de guider le gaz vers un orifice (37) à distance de cet axe de rotation pour entraîner la rotation de l'élément tournant (34) à l'aide du gaz éjecté par l'orifice (37), **caractérisé en ce que** le dispositif (30, 300) est pourvu d'au moins un bras moteur (36) qui s'étend dans une direction essentiellement perpendiculaire à l'axe de rotation et dans lequel le conduit est positionné dans le bras moteur pour guider le gaz vers l'orifice (37) dans le bras moteur,
dans lequel la sortie du générateur, responsable pour la répartition des gaz produits par le générateur (35), et le bras moteur (36) font partie des éléments tournants et sont adaptés pour tourner autour de l'axe de rotation relatif à la structure (31) pour éjecter les gaz d'échappement du générateur (33, 40) directement dans le bras moteur (36).

2. Dispositif aérien (30, 300) selon la revendication 1, dans lequel le générateur est positionné dans le dispositif (30) avec son axe central concentrique à l'axe de rotation de l'élément tournant (34).

3. Dispositif aérien (30, 300) selon la revendication 1 ou 2, dans lequel le bras moteur (36) est profilé pour participer à la sustentation générée par l'élément tournant (34).

4. Dispositif aérien (30, 300) selon une des revendications 1 à 3, dans lequel l'élément tournant (34) est connecté avec la structure (31) grâce à un cardan.

5. Dispositif aérien (30, 300) selon une des revendications 1 à 3, dans lequel les pales (38) sont connectées avec l'élément tournant (34) grâce à un joint homocinétique.

6. Dispositif aérien (30, 300) selon une des revendications 1 à 5, dans lequel la structure (31) est adaptée pour fixer le dispositif aérien (30, 300) sur une charge (50).

7. Dispositif aérien (30, 300) selon une des revendications 1 à 6, dans lequel le dispositif (30, 300) est pourvu d'une télécommande pour contrôler à distance la sustentation générée par l'élément tournant (34).

8. Aérodyne pourvu d'un dispositif aérien (30, 300) selon l'une des revendications 1 à 7.

## Claims

1. An aerial device (30, 300), comprising a structure (31) and a rotating element (34) provided with at least one blade (38), suitable for effecting a rotation with respect to the structure (31) about an axis of rotation, the device (30, 300) being provided with means making it possible to cause the rotating element (34) to rotate relative to the structure (31), these means including a gas generator (33, 40) received in the structure (31) and a pipe that makes it possible to guide the gas towards an orifice (37) at a distance from this axis of rotation in order to cause the rotating element (34) to rotate by means of the gas ejected through the orifice (37), **characterised in that** the device (30, 300) is provided with at least one drive arm (36) which extends in a direction substantially perpendicular to the axis of rotation and wherein the pipe is positioned in the drive arm in order to guide the gas towards the orifice (37) in the drive arm, wherein the generator outlet, which is responsible for the distribution of the gases produced by the generator (35), and the drive arm (36) are part of the rotating elements and are suitable for rotating about the axis of rotation relative to the structure (31) to eject the exhaust gases from the generator (33, 40) directly into the drive arm (36).

2. The aerial device (30, 300) according to claim 1, wherein the generator is positioned in the device (30) with its central axis concentric to the axis of rotation of the rotating element (34).

3. The aerial device (30, 300) according to claim 1 or 2, wherein the drive arm (36) is profiled in order to contribute to the lift generated by the rotating element (34).

4. The aerial device (30, 300) according to one of claims 1 to 3, wherein the rotating element (34) is connected to the structure (31) by means of a gimbal.

5. The aerial device (30, 300) according to one of claims 1 to 3, wherein the blades (38) are connected to the rotating element (34) by means of a homokinetic joint.

6. The aerial device (30, 300) according to one of claims 1 to 5, wherein the structure (31) is suitable for fixing the aerial device (30, 300) on a load (50).

7. The aerial device (30, 300) according to one of claims 1 to 6, wherein the device (30, 300) is provided with a remote control to remotely control the lift generated by the rotating element (34).

8. An aerodyne (30, 300) provided with an aerial device according to one of claims 1 to 7.

## Patentansprüche

1. Flugvorrichtung (30, 300), die eine Struktur (31) und ein mit mindestens einem Blatt (38) versehenes Drehelement (34), das angepasst ist, um eine Rotation um eine Rotationsachse relativ zu der Struktur (31) auszuführen, beinhaltet, wobei die Vorrichtung (30, 300) mit Mitteln versehen ist, die das Bewirken der Rotation des Drehelements (34) relativ zu der Struktur (31) ermöglichen, wobei diese Mittel einen Gasgenerator (33, 40), der in der Struktur (31) aufgenommen ist, und eine Leitung, die das Führen des Gases zu einer von dieser Rotationsachse entfernt liegenden Öffnung (37) hin ermöglicht, umfassen, um mit Hilfe des durch die Öffnung (37) ausgestoßenen Gases die Rotation des Drehelements (34) zu bewirken, **dadurch gekennzeichnet, dass** die Vorrichtung (30, 300) mit mindestens einem Antriebsarm (36), der sich in eine zu der Rotationsachse im Wesentlichen senkrechten Richtung erstreckt, versehen ist, und wobei die Leitung in dem Antriebsarm positioniert ist, um das Gas zu der Öffnung (37) in dem Antriebsarm zu leiten, wobei der Auslass des Generators, der für die Verteilung der durch den Generator (35) produzierten Gase verantwortlich ist, und der Antriebsarm (36) Teil der Drehelemente sind und angepasst sind, um sich um die Drehachse relativ zu der Struktur (31) zu drehen, um die Abgase des Generators (33, 40) direkt in den Antriebsarm (36) auszustoßen.

2. Flugvorrichtung (30, 300) gemäß Anspruch 1, wobei der Generator so in der Vorrichtung (30) positioniert ist, dass seine Mittelachse mit der Rotationsachse des Drehelements (34) konzentrisch ist.

3. Flugvorrichtung (30, 300) gemäß Anspruch 1 oder 2, wobei der Antriebsarm (36) profiliert ist, um bei dem durch das Drehelement (34) erzeugten Auftrieb mitzuwirken.

4. Flugvorrichtung (30, 300) gemäß einem der Ansprüche 1 bis 3, wobei das Drehelement (34) über ein Kreuzgelenk mit der Struktur (31) verbunden ist.

5. Flugvorrichtung (30, 300) gemäß einem der Ansprüche 1 bis 3, wobei die Blätter (38) über ein Gleichganggelenk mit dem Drehelement (34) verbunden sind.

6. Flugvorrichtung (30, 300) gemäß einem der Ansprüche 1 bis 5, wobei die Struktur (31) angepasst ist, um die Flugvorrichtung (30, 300) auf einer Last (50) zu befestigen.

7. Flugvorrichtung (30, 300) gemäß einem der Ansprüche 1 bis 6, wobei die Vorrichtung (30, 300) mit einer Fernbedienung versehen ist, um den durch das Drehelement (34) erzeugten Auftrieb aus der Entfernung zu steuern.

8. Ein Luftfahrzeug schwerer als Luft, das mit einer Flugvorrichtung (30, 300) gemäß einem der Ansprüche 1 bis 7 versehen ist.
